(19) Europäisches Patentamt
European Patent Office
Office européen des brevets

(11) EP 1 635 164 B1

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
***G01N 21/64** (2006.01)* ***G01N 21/27** (2006.01)*

(21) Anmeldenummer: **05090255.0**

(22) Anmeldetag: **07.09.2005**

(54) **VERFAHREN ZUR KALIBRIERUNG EINES PHOTOLUMINESZENZMESSSYSTEMS**

METHOD FOR CALIBRATION OF A PHOTOLUMINESCENCE MEASURING SYSTEM

MÉTHODE POUR CALIBRAGE D'UN SYSTÈME DE MESURE DE PHOTOLUMINESCENCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.09.2004 DE 102004044717**

(43) Veröffentlichungstag der Anmeldung:
**15.03.2006 Patentblatt 2006/11**

(60) Teilanmeldung:
**09153880.1 / 2 068 141**

(73) Patentinhaber:
- **Bundesanstalt für Materialforschung und -prüfung (BAM)
12205 Berlin (DE)**
- **Sigma-Aldrich GmbH
9470 Buchs (CH)**

(72) Erfinder:
- **RESCH-GENGER, Ute
12203 Berlin (DE)**
- **PFEIFER, Dietmar
12459 Berlin (DE)**
- **MONTE, Christian
13591 Berlin (DE)**
- **HOFFMANN, Angelika
12623 Berlin (DE)**
- **NORDING, Pierre
9473 Gams SG (CH)**
- **SCHÖNENBERGER, Bernhard
9478 Azmoos SG (CH)**
- **HOFFMANN, Katrin
12524 Berlin (DE)**
- **SPIELES, Monika
12587 Berlin (DE)**
- **RURACK, Knut
12247 Berlin (DE)**

(74) Vertreter: **Zimmermann & Partner
Patentanwälte mbB
Postfach 330 920
80069 München (DE)**

(56) Entgegenhaltungen:

| | |
|---|---|
| **DE-A1- 10 200 865** | **DE-A1- 10 352 123** |
| **DE-A1- 19 847 370** | **DE-T2- 69 530 323** |
| **US-A- 4 704 891** | **US-A- 5 574 288** |

- **GARDECKI J A ET AL: "SET OF SECONDARY EMISSION STANDARDS FOR CALIBRATION OF THE SPECTRAL RESPONSIVITY IN EMISSION SPECTROSCOPY" APPLIED SPECTROSCOPY, THE SOCIETY FOR APPLIED SPECTROSCOPY. BALTIMORE, US, Bd. 52, Nr. 9, 1. Januar 1998 (1998-01-01), Seiten 1179-1189, XP008064438 ISSN: 0003-7028**
- **RESCH-GENGER U ET AL: "Traceability in fluorometry: Part II. Spectral fluorescence standards" JOURNAL OF FLUORESCENCE KLUWER ACADEMIC/PLENUM PUBLISHERS USA, Bd. 15, Nr. 3, Mai 2005 (2005-05), Seiten 315-336, XP002481809 ISSN: 1053-0509**
- **EATON D F: "Reference materials for fluorescence measurement", PURE & APPLIED CHEMISTRY, PERGAMON PRESS, OXFORD, GB, vol. 60, no. 7, 1 January 1988 (1988-01-01), pages 1107-1114, XP002721157, ISSN: 0033-4545, DOI: 10.1351/PAC198860071107**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 635 164 B1

## Beschreibung

Die Erfindung betrifft ein Verfahren zur Kalibrierung eines Photolumineszenzmesssystems, insbesondere eines Fluoreszenzmesssystems.

D.F. Eaton (1988) beschreibt in PURE & APPL CHEM, Bd. 60, Nr.7, Seiten 1107-1114 Referenzmaterialien für Fluoreszenzmessungen. WO 97119188 A1 beschreibt die Bestimmung biologischer Moleküle mittels chemischer Verstärkung und optischer Sensoren. WO 02/104072 A2 beschreibt emissive Multichromophor-Systeme. US 2003/096419 A1 beschreibt ein Verfahren um zu bestimmen, ob eine Flüssigkeit in einer Klimaanlage oder einem Kühlsystem verändert wurde, wobei zur Markierung von Kühl- und Schmiermitteln Fluoreszenzfarbstoffe verwendet werden. Rance A. Velapoldi et al. (2004) beschreiben in Journal of Fluorescence, Band 14(4), Seiten 465-472 korrigierte Emissionsspektren und Quantenausbeuten einer Serie von im sichtbaren Spektralbereich fluoreszierenden Verbindungen.

Jede Lumineszenzmesstechnik liefert Messdaten, die sich aus analyt- und gerätespezifischen Beiträgen zusammensetzen. Die nicht erwünschten gerätespezifischen Beiträge spiegeln die Wellenlängen- und Polarisationsabhängigkeit von Gerätekomponenten des verwendeten Messgerätes wieder. Verantwortlich für diese Abhängigkeiten sind insbesondere die im Anregungs- und Emissionskanal des Gerätes enthaltenen optischen Bauelemente, die Anregungslichtquelle und die eingesetzten Detektionssysteme. Die Vergleichbarkeit von Lumineszenzdaten über Geräte- und Laborgrenzen hinaus, die Erfassung der Gerätealterung, der Anspruch auf Rückführbarkeit von Lumineszenzdaten auf radiometrische Primärnormale (entsprechend der allgemeinen Forderung in EN ISO/IEC 17025) sowie viele quantitative Fluoreszenzaussagen, die Bestimmung von relativen Fluoreszenzquantenausbeuten und die Optimierung von Lumineszenzmethoden erfordern die Ermittlung dieser gerätespezifischen Beiträge. Dies gilt insbesondere für vergleichende Bewertungen von spektral gegen einander verschobenen Lumineszenzprofilen oder für Emissionsmessungen bei verschiedenen Anregungswellenlängen.

Photolumineszenzmessgeräte bestehen aus einem Anregungskanal, der u.a. eine Anregungslichtquelle und ein wellenlängenselektierendes optisches Bauelement enthält und einem meist rechtwinklig zum Strahlengang des Anregungslichtes angeordneten Emissionskanal, mit dem das von dem im Probenraum befindlichen Chromophor nach Lichtabsorption emittierte Licht (Photolumineszenz) aufgezeichnet wird. Oftmals wird über einen Strahlteiler ein definierter Teil des Anregungslichtes in einen Referenzkanal eingekoppelt, der ein optisches Bauelement wie einen Spiegel oder einen Streuer und einen (Referenz-) Detektor enthält. Mit dem Referenzkanal wird die aktuelle Anregungslichtintensität bei der Anregungswellenlänge aufgezeichnet, um so kurzzeitige Schwankungen der Anregungslichtintensität zu erfassen. Die Erfassung der oben genannten gerätespezifischen Beiträge zum Fluoreszenzsignal kann durch die Ermittlung so genannter Korrekturfunktionen erfolgen, die die Wellenlängen- und Polarisationsabhängigkeiten dieser Effekte für den Emissions- und den Anregungskanal des jeweiligen Gerätes beschreiben. Diese Korrekturfunktionen werden dabei separat ermittelt. Die Emissionskorrekturfunktion enthält dabei die wellenlängen- und polarisationsabhängige Transmissionseffizienz der optischen Bauteile im Emissionskanal und die wellenlängen- und polarisationsabhängige spektrale Empfindlichkeit des eingesetzten Detektionssystems. Die Anregungskorrekturfunktion beschreibt die wellenlängenabhängige spektrale Strahldichte der Anregungslichtquelle und die wellenlängen- und polarisationsabhängige Transmissionseffizienz der optischen Bauteile im Anregungskanal.

Bekannt ist der Einsatz zertifizierter physikalischer Transferstandards zur Erfassung der gerätespezifischen Effekte. Zur Kalibrierung des Anregungskanals kommen dabei typischerweise zertifizierte Empfängernormale zum Einsatz und für die Kalibrierung des Emissionskanals zertifizierte Standardlampen. Für den Einsatz physikalischer Transfernormale nachteilig sind die für die Anwendung notwendigen guten Optikkenntnisse des Anwenders, kostenintensive Rekalibrierungen, brenndauerabhängige Änderungen der spektralen Strahldichte von Standardlampen, und im Falle der Emissionskorrektur mit Standardlampen die unterschiedlichen Emissionscharakteristika von Lampe und Probe und die um mindestens mehr als drei Größenordnungen unterschiedlichen spektralen Strahldichten von Transfernormal und einer typischen lumineszierenden Probe. Dies alles kann zu fehlerbehafteten und unbefriedigenden Korrekturfunktionen führen und ist zudem aufwändig und kostenintensiv. Physikalische Transferstandards sind außerdem zumeist nicht für die Kalibrierung von einfachen kompakten Photolumineszenzmesssystemen geeignet.

Für die Anregungskorrektur werden auch so genannte Quantenzähler eingesetzt. Dies sind hochkonzentrierte Farbstofflösungen, die einfallende Lichtquanten vollständig absorbieren und mit einer wellenlängenunabhängigen Fluoreszenzquantenausbeute emittieren. Quantenzähler liefern sehr konzentrations- und geometrieabhängige Messdaten und sind zudem anfällig für Polarisationseffekte. Standardisierte Kalibrierverfahren mit definierten Konzentrationen in Kombination mit definierten Messgeometrien sind für Quantenzähler nicht verfügbar.

Bekannt sind ebenfalls so genannte Fluoreszenzstandards, die typischerweise auf der Photolumineszenz einer chemischen Verbindung basieren. Spektrale Fluoreszenzstandards oder so genannte Emissions- und Anregungsstandards mit bekannten, (für gerätespezifische Effekte) korrigierten Emissions- bzw. Anregungsspektren können zur Ermittlung der spektralen Charakteristika von Photolumineszenzmesssystemen im Rahmen einer Gerätekalibrierung verwendet werden. Solche Fluoreszenzstandards werden in verschiedenen Formen eingesetzt, insbesondere in Form von

Lösungen oder eingebettet in feste Polymer- oder Glasmatrizes. Vorteil von Fluoreszenzstandards, insbesondere in Form von Lösungen, ist, dass sich diese mit den zu untersuchenden lumineszierenden Proben hinsichtlich ihrer Lumineszenzintensität und Emissionscharakteristika stark ähneln. Fluoreszenzstandards erlauben somit die (spektrale) Kalibrierung unter den bei typischen Probenmessungen angewandten Bedingungen. Fluoreszenzstandards lassen sich in vielen verschiedenen Gerätetypen, Formaten und Messgeometrien vermessen und sind somit auch zur Kalibrierung von Fluoreszenzmesssystemen mit speziellen Probengeometrien oder -formaten geeignet, beispielsweise mit Mikroküvetten, Mikrotiterplatten oder Kryostatsystemen. Allein Fluoreszenzstandards erlauben die Durchführung der Kalibrierung in der selben Küvetten- und Messanordnung wie die eigentliche Probenmessung und liefern auf diese Weise optimale Kalibrierergebnisse. Problematisch bei Fluoreszenzstandards ist die Vielzahl der zu definierenden Stoff- und Lumineszenzeigenschaften. Voraussetzung für die Eignung eines Transferstandards ist die vollständige Charakterisierung aller applikationsrelevanten Eigenschaften inklusive der verwendeten Methode und der Angabe der Messunsicherheit und eine hinreichenden Langzeitstabilität im festen reinen Zustand und in Lösung bzw. eingebettet in einer Matrix.

Ein statistischer Ansatz zur Verknüpfung von Teilkorrekturfunktionen unterschiedlicher Farbstoffstandards zu einer Gesamtkorrekturfunktion unter Anwendung einer Zählratenstatistik (Poisson-Statistik) wird von J.A. Gardecki und M. Maroncelli (Appl. Spectrosc. 1998, 52 1179) beschrieben. Die dort verwendeten Fluoreszenzstandards weisen teilweise die oben beschriebenen Unzulänglichkeiten auf, wie z.B. steile und strukturierte Bandenverläufe ($\alpha$-NPO), unzureichende Photostabilität in Lösung (Tryptophan, Coumarin 102) oder eine zu hohe Fluoreszenzanisotropie (LDS 751). Gemäß dem verwendeten mathematischen Ansatz einer Zählstatistik ist das Verfahren nur auf Geräte ausgelegt, die im Photo-Counting-Modus und somit mit sehr großen absoluten Zahlenwerten arbeiten. Die Anwendung der Zählstatistik für Geräte im Analogmodus, wo wesentlich kleinere Zahlenwerte für die Intensitäten erhalten werden, führt zu deutlichen Artefakten in den so erhaltenen Korrekturfunktionen. Zudem ist das Verfahren auf die Nutzung durch erfahrene Fluoreszenzspektroskopiker ausgelegt. Problematisch an dem Verfahren ist zudem, dass bei der Verknüpfung der Teilkorrekturkurven der einzelnen Emissionsstandards miteinander für die an vielen Fluorometern ausgegebenen, Referenzlicht-bezogenen Emissionsspektren (Quotientenbildung aus Emission und Referenz) mitunter Artefakte auf der Gesamtkorrekturfunktion erzeugt werden. Diese resultieren dann, wenn nach der Blindwertkorrektur sehr kleine oder gar - wie im Bereich der Ausläufer von Fluoreszenzbanden - geringfügig negative Werte in die Rechnung eingehen.

Insgesamt lässt sich somit feststellen, dass derzeit kein Kalibriersystem existiert, das eine zuverlässige, rückführbare und leicht handhabbare Kalibrierung des gesamten Spektralbereichs eines Photolumineszenzmesssystems erlaubt und auf Farbstoffstandards mit bekannter Unsicherheit der anwendungsrelevanten Fluoreszenzeigenschaften zurückgreift, die sämtlichen Anforderungen an eine reproduzierbare und rückführbare Kalibrierung erfüllen. Somit besteht die Aufgabe der vorliegenden Erfindung darin, ein Verfahren zur Kalibrierung zur Verfügung zu stellen, die die einfach und reproduzierbar handhabbare, auf radiometrische Primärnormale (Schwarzer Strahler; Kryoradiometer) zurückführbare und zuverlässige Kalibrierung des eines sehr großen Spektralbereichs eines Photolumineszenzmesssystems erlauben.

Diese Aufgabe wird gelöst durch ein Verfahren mit den Merkmalen des unabhängigen Anspruchs.

Das erfindungsgemäße Verfahren zur Kalibrierung eines Photolumineszenzmesssystems, insbesondere eines Fluoreszenzmesssystems, umfasst die Schritte

(a) Messung von Fluoreszenzspektren $J_i(\lambda)$ einer Mehrzahl von Fluoreszenzstandards i mit dem zu kalibrierenden Photolumineszenzmesssystem, wobei die Fluoreszenzstandards i derart gewählt werden, dass ihre spektral korrigierten und normierten Fluoreszenzspektren $I_i(\lambda)$ zusammen einen vorgegebenen Spektralbereich abdecken derart, dass Fluoreszenzbanden der korrigierten, jeweils spektral aufeinander folgenden Fluoreszenzspektren $I_i(\lambda)$ an ihren Überschneidungswellenlängen $\lambda_{i/i+l}$ mindestens eine vorgegebene Mindestintensität aufweisen;

(b) Berechnung von Verknüpfungsfaktoren $\alpha_i$ durch statistische Mittelung aufeinander folgender, überlappender Teilkorrekturfunktionen $F_i(\lambda)$, welche durch Quotientenbildung aus den gemessenen Fluoreszenzspektren $J_i(\lambda)$ und den entsprechenden korrigierten Fluoreszenzspektren $I_i(\lambda)$ der Fluoreszenzstandards i gebildet werden, wobei die statistische Mittelung über einen vorgegebenen, begrenzten Überlappungsbereich $\lambda_{i/i+l} \pm \Delta\lambda_{OL}$ um die gegenseitige Überschneidungswellenlänge $\lambda_{i/i+l}$ erfolgt; und

(c) Ermittlung einer Gesamtkorrekturfunktion $F(\lambda)$ für den vorgegebenen Spektralbereich durch insbesondere statistisches Verknüpfen der in Abhängigkeit der Verknüpfungsfaktoren $\alpha_i$ gewichteten Teilkorrekturfunktionen $F_i(\lambda)$.

Im Rahmen der vorliegenden Erfindung wird unter dem Begriff korrigiertes Fluoreszenzspektrum ein Emissions- oder Anregungsspektrum verstanden, das in einem rückführbar kalibrierten Lumineszenzmesssystem unter definierten Messbedingungen erhalten wurde. Durch Korrektur der gerätespezifischen Beiträge des kalibrierten Messsystems ist das korrigierte Fluoreszenzspektrum geräteunabhängig. Vorzugsweise handelt es sich um ein von einer autorisierten Behörde (beispielsweise dem NIST) zertifiziertes Spektrum.

Gegenüber bekannten Vorgehensweisen (Gardecki & Maroncelli, Appl. Spectrosc. 1998, 52, 1179) unterscheidet sich das erfindungsgemäße Verfahren vor allem dadurch, dass die statistische Mittelung und/oder Gewichtung der Teilkorrekturfunktionen zur Ermittlung des Verknüpfungsfaktoren $\alpha i$, in deren Abhängigkeit die Ermittlung der Gesamtkorrekturfunktion erfolgt, ausschließlich für definierte Überlappungsbereiche der Teilkorrekturfunktionen durchgeführt wird und zwar nur für eine begrenzte enge spektrale Umgebung der einzelnen Überschneidungswellenlängen. In Zusammenhang mit den erfindungsgemäß aufeinander abgestimmten Farbstoffstandards, die an den jeweiligen Überschneidungswellenlängen ihrer Fluoreszenzbanden eine vorgegebene relative Mindestintensität aufweisen, wird somit erreicht, dass in die Statistik nur Spektralbeiträge der zugrunde liegenden Ausgangsspektren mit relativ hoher Intensität und damit geringen Fehlerbeiträgen eingehen. Insbesondere gestattet das erfindungsgemäße Verfahren auch die Verwendung nicht ideal verlaufender Messspektren und deren Teilkorrekturfunktionen. Beispielsweise führt das vorliegende Verfahren auch bei solchen Messspektren zu einer glatten und stetig verlaufenden Gesamtkorrekturfunktion, die nach ihrer Blindwertkorrektur (Subtraktion des Pufferspektrums) im Bereich der Spektrenausläufer negative Intensitätswerte aufweisen.

Der Überlappungsbereich um die Überschneidungswellenlängen entspricht erfindungsgemäß maximal einem beidseitig an den jeweiligen Überschneidungspunkt anschließenden Bereich von 12 nm. Insbesondere wird die statistische Mittelung über einen Bereich von $\pm10$ nm, vorzugsweise von nur $\pm8$ nm, um jeden Überschneidungspunkt durchgeführt. Dieses garantiert zusammen mit den geforderten Mindestintensitäten der Spektren an ihren Überschneidungswellenlängen, dass ausschließlich relativ hohe Intensitäten in die angewandte Statistik einfließen und somit artifizielle Erscheinungen in den Korrekturfunktionen vermieden werden.

Es ist vorgesehen, dass die einzuhaltende relative Mindestintensität an den einzelnen Überschneidungswellenlängen jeweils mindestens 20 % der maximalen Intensität der Fluoreszenzbanden beträgt. Noch weniger fehlerbehaftete Ergebnisse werden bei einer Intensität von mindestens 25 %, vor zugsweise mit mindestens 30 % der maximalen Bandenintensität erhalten. In konkreten Anwendungen liegen diese Intensitäten bei etwa 40 % der maximalen Bandenintensität. Die vorgenannten Werte beziehen sich auf den UV/vis-Spektralbereich mit $\lambda \leq 700$ nm. Da im NIR-Bereich mit $\lambda > 700$ nm grundsätzlich geringere Quantenausbeuten und damit absolute Intensitäten vorliegen, können in diesem Bereich geringere Mindestintensitäten an den Überschneidungspunkten von mindestens 10 %, insbesondere bei etwa 12 %, vorzugsweise 15 % der Maximalintensität der jeweiligen flankierenden Bande zugelassen werden. In Verbindung mit dem begrenzten Überlappungsbereich, für den die statistische Ermittlung der Verknüpfungsfaktoren $\alpha_i$ erfolgt, wird somit sichergestellt, dass zumindest im UV/vis-Bereich ausschließlich Intensitäten der korrigierten bzw. der gemessenen (normierten) Spektren von mindestens 10 %, insbesondere von mindestens 15 %, bevorzugt von mindestens 20 % bezogen auf die Maximalintensitäten der entsprechenden Spektren in die Statistik einfließen.

Nach einer besonders vorteilhaften Ausgestaltung des Verfahrens wird der Verlauf der Gesamtkorrekturfunktion in einem vorgegebenen spektralen, eng begrenzten Verknüpfungsbereich $\lambda_{i/i+l} \pm A\lambda_{LK}$ (LK = Linkage) um die Überschneidungswellenlängen, der noch enger ist als der oben genannte Überlappungsbereich $\lambda_{i/i+l} \pm \Delta\lambda_{OL}$ (OL = Overlap), durch statistische Mittelung der gewichteten, aufeinander folgenden Teilkorrekturfunktionen berechnet. Auf der anderen Seite entspricht der Verlauf der Gesamtkorrekturfunktion außerhalb dieses Verknüpfungsbereichs um die Überschneidungswellenlängen den Verläufen der gewichteten, aber nicht gemittelten Teilkorrekturfunktionen. In diesem Zusammenhang ist besonders bevorzugt vorgesehen, dass der begrenzte Verknüpfungsbereich um die Überschneidungswellenlängen sehr eng bemessen ist, insbesondere nicht weiter als $\lambda_{i/i+l} \pm5$ nm ist, speziell höchstens $\pm2$ nm. Besonders bevorzugt umfasst der Verknüpfungsbereich nur genau den jeweiligen Überschneidungspunkt selbst. Mit anderen Worten setzt sich die Gesamtkorrekturfunktion aus den gewichteten Teilkorrekturfunktionen zusammen, wobei nur an den Überschneidungswellenlängen selbst eine Mittelung der gewichten Teilkorrekturfunktionen vorgenommen wird. Damit wird die Gesamtkorrekturfunktion ausschließlich aus Bereichen hoher Lumineszenzintensität der zugrunde liegenden, gemessenen und korrigierten Teilspektren gebildet. Intensitäten unterhalb der für die Schnittpunkte geforderten Mindestintensität werden weitestgehend ausgeblendet. Der Verzicht auf die Einbeziehung von Spektrenteilen mit geringer Lumineszenzintensität in die Mittelung führt zu glatten Gesamtkorrekturfunktionen mit einer minimierten Messunsicherheit.

Nach einer bevorzugten Ausgestaltung des Verfahrens wird die Gesamtkorrekturfunktion über einen vorgegebenen Spektralbereich gebildet, der den UV/vis/NIR-Bereich zumindest teilweise abdeckt. Dieser Spektralbereich reicht für die Emissionskorrektur bevorzugt von 310 bis 730 nm, insbesondere von 300 bis 950 nm, und für die Anregungskorrektur von 280 bis 600 nm, insbesondere von 250 bis 630 nm, vorzugsweise von 240 bis 800 nm. Unter Berücksichtigung der erfindungsgemäßen Anforderungen an die Farbstoffstandards erfordert dieses eine Kombination von 5 bis 7 Farbstoffen.

Eine weitere bevorzugte Ausführung der Erfindung sieht vor, eine statistische, wellenlängenabhängige Unsicherheit für die Gerätecharakterisierung und ggf. auch für Fluoreszenzmessungen beim Anwender für den vorgegebenen Spektralbereich der Gesamtkorrekturfunktion zu berechnen. Dies setzt die Kenntnis der wellenlängenabhängigen Messunsicherheitsbilanzen für jedes korrigierte Farbstoff-Fluoreszenzspektrum voraus. Wenn seitens des Anwenders aus mehreren Wiederholungsmessungen (z.B. $N \geq 7$) der Farbstoffspektren der Beitrag der gerätespezifischen Messunsicherheit (Standardabweichung) ermittelt wird, kann aus den o. g. wellenlängenabhängigen Messunsicherheitsbilanzen für die korrigierten Spektren der Farbstoffe und der Wiederholstandardabweichung eine Gesamt-Messunsicherheitsbilanz für das zu kalibrierende Photolumineszenzmesssystem aufgestellt werden.

Weitere vorteilhafte Ausgestaltungen der Erfindung sind Gegenstand der übrigen Unteransprüche.

Die Erfindung wird nachfolgend in Ausführungsbeispielen anhand der Abbildungen näher erläutert. Es zeigen:

Figur 1: Emissions- und Anregungsspektren eines Sets von fünf Emissionsstandards,

Figur 2: Emissionsbanden der Emissionsstandards C und D aus Figur 1;

Figur 3: ein Ablaufdiagramm des erfindungsgemäßen Verfahrens zur Kalibrierung eines Lumineszenzspektrometers;

Figur 4: Verlauf der korrigierten (zertifizierten) und der gemessenen Emissionsspektren der Farbstoffstandards A bis E sowie der Teilkorrekturfunktionen und der Gesamtkorrekturfunktion;

Figur 5: Anwendung der Gesamtkorrekturfunktion auf ein Fluoreszenzspektrum von Chininsulfat und

Figur 6: Anwendung der Gesamtkorrekturfunktion auf ein Fluoreszenzspektrum von DCM.

Zur Kalibrierung des Emissionskanals eines Lumineszenzmesssystems, hier eines Fluoreszenzspektrometers (Fluorometer), wird gemäß dem vorliegenden Beispiel ein Set von fünf Fluo reszenzstandards (Emissionsstandards) A, B, C, D und E eingesetzt, wobei A ein Biphenyl-, B ein Naphthalin-, C und D jeweils ein Coumarin- und E ein Oxazinderivat ist. Im konkreten Beispiel handelt es sich um folgende Farbstoffe:

A: 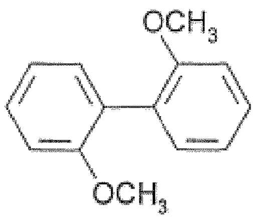, B: 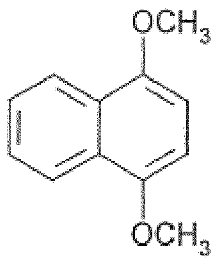, C: 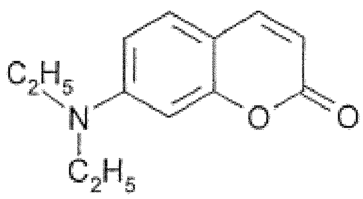

D: 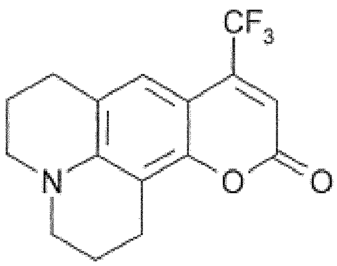, E: 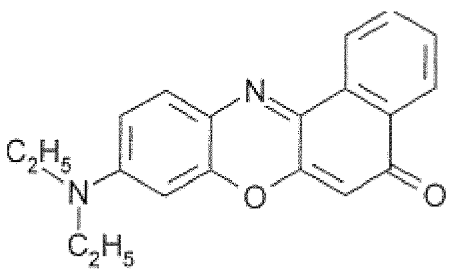

Alle Farbstoffe weisen eine Reinheit von über 99 % auf, sind insbesondere als Feststoff bei Lagerung im Dunklen bei 4 °C in Gegenwart von Luftsauerstoff langzeitstabil. Die luftgesättigten Lösungen sind bei Lagerung im Dunklen bei 4 °C ausreichend langzeitstabil und bilden unter den für Photolumineszenzmessungen typischen Mess- und Anregungsbedingungen keine Photoprodukte, die in dem für die Kalibrierung eingesetzten Spektralbereich absorbieren oder emittieren. Figur 1 zeigt die spektral korrigierten und normierten Emissionsspektren der Emissionsstandards A bis E (oben) sowie die korrigierten und normierten Anregungsspektren der fünf Anregungsstandards AX bis EX. Es ist erkennbar, dass sämtliche Standardspektren einen breiten und unstrukturierten Bandenverlauf mit nur jeweils einem Maximum und keinen Schultern oder Unstetigkeiten in dem, für die Kalibrierung verwendeten Spektralbereich aufweisen. Ferner wurde bei der Auswahl der Fluoreszenzfarbstoffe Wert auf möglichst große Wellenlängenabstände zwischen den Maxima der Emissionsspektren (Em) und denen der dazugehörigen Absorptionsspektren (Abs) gelegt (Stokes-Shift), um die nochmalige Absorption einmal emittierter Photonen aufgrund von Em-Abs-Banden-Überlappung zu vermeiden. Insbesondere beträgt dieser Abstand ca. 5400, 4900, 4300, 4900 und 2400 $cm^{-1}$ für die Farbstoffe A, B, C, D b z w. E. Die Farbstoffe weisen zudem eine geringe Anisotropie mit $r = 0{,}05$ (UV/vis-Spektralbereich mit $\lambda \leq 700$ nm) sowie eine hinreichend geringe Temperaturabhängigkeit der Form der Fluoreszenzbanden im Temperaturbereich zwischen 20°C und 30 °C auf.

Am Beispiel der korrigierten und normierten Emissionsspektren der Fluoreszenzstandards C und D zeigt Figur 2 weitere wesentliche Eigenschaften der ausgewählten Farbstoffe. Zunächst ist erkennbar, dass die Intensität $I(\lambda_{C/D})$ beider Spektren $I_C(\lambda)$ und $I_D(\lambda)$ an ihrem Überschneidungspunkt $\lambda_{C/D}$ größer als 20 % der jeweiligen maximalen (normierten) Intensität $I_C(\lambda_{max})$ und $I_D(\lambda_{max})$ ist. Diese Bedingung wird auch für alle anderen Überschneidungswellenlängen $\lambda_{i/i+l}$ erfüllt. Im vorliegenden Beispiel der Verbindungen A bis E wird für sämtliche Überschneidungspunkte sogar eine Intensität von mindestens 40 % der Maximalintensitäten eingehalten. Für Farbstoff D ist zudem die Halbwertsbreite $FWHM_D$ angedeutet, die erfindungsgemäß für sämtliche Farbstoffe zumindest im UV/vis-Bereich größer als 1400 $cm^{-1}$ ist. Vorliegend betragen die Halbwertsbreiten der Emissionsspektren der Verbindungen A bis E etwa 4250, 4400, 2850, 2890 bzw. 1630 $cm^{-1}$.

Der Spektralbereich der vorgestellten Standardkombinationen kann durch die Integration weiterer Farbstoffe wie z.B. der genannten Merocyanin- und Styrylverbindungen gemäß den oben beschriebenen allgemeinen Strukturen 6, 7 und 8 in den NIR-Spektralbereich ausgedehnt werden. Hier gelten analoge Auswahl- und Anforderungskriterien, wobei im Bereich bei A > 700 nm lediglich eine Mindestintensität an den Überlappungspunkten von insbesondere mindestens 12 % der Maximalintensität, eine Halbwertsbreite von insbesondere mindestens 1200 $cm^{-1}$ sowie eine Anisotropie von insbesondere $r \leq 0,07$ gefordert wird.

Der Ablauf des erfindungsgemäßen Kalibrierverfahrens ist in Figur 3 in Verbindung mit Figur 4 dargestellt. Beginnend in Schritt SI gemäß Figur 3 erfolgt zunächst die Aufnahme der Rohemissionsspektren $J_i^R(\lambda)$ der fünf (oder mehr) oben genannten, im Kit enthaltenen Fluoreszenzstandards A bis E mit dem zu kalibrierenden Messsystem. Die Messbedingungen am Photolumineszenzmessgerät - wie Spaltbreiten, Detektorspannungen, Scanmodus und -geschwindigkeit, Filter, Polarisatoren und Polarisatorwinkel etc. - werden auf die Parameter eingestellt, unter denen gewöhnlich Fluoreszenzspektren aufgenommen werden bzw. für die spektral korrigierte Lumineszenzspektren benötigt werden. Unter den Bedingungen jeder Farbstoffmessung wird auch jeweils ein Blindwertspektrum $J_i^B(\lambda)$ des verwendeten Lösungsmittels gemessen.

Die folgende, nutzerfreundliche Berechnung einer Gesamtkorrekturfunktion für das Fluorometer erfolgt durch einen Programmalgorithmus, der die anschließenden Schritte ausführt. Im nachfolgenden Schritt S2 werden die gemessenen Rohspektren $J_i^R(\lambda)$ und die Blindwertspektren $J_i^B(\lambda)$ vom Programm eingelesen. Das Programm erwartet mindestens 2 oder mehr gemessene Fluoreszenzspektren spektral aufeinander folgender Farbstoffe und der dazugehörigen Blindwertspektren im ASCII-DAT- oder -CSV-Format. Es unterstützt spektrale Schrittweiten $\Delta\lambda(J_i)$ der Messpunkte zwischen 0,1 und 10 nm, wobei Schrittweiten zwischen 0,5 und 2,0 nm bevorzugt werden.

In Schritt S3 werden die eingelesenen Spektren durch verschiedene Subroutinen analysiert. Diese umfassen beispielsweise eine Überprüfung der Spektren hinsichtlich ihrer Formatkompatibilität und gegebenenfalls ihre Umwandlung in ein vom Programm lesbares Format, ihre Sortierung hinsichtlich des Wellenlängenbereichs und Zugehörigkeit zur Farbstoffgruppe bzw. zur Blindwertgruppe. Zudem werden in diesem Schritt alle Spektrenbereiche unterhalb einer Intensitätsschwelle von 5 % bezogen auf die zugehörige Maximalintensität abgeschnitten. Eine weitere Routine ordnet die gemessenen Spektren $J_i(\lambda)$ den entsprechenden zertifizierten Spektren $I_i(\lambda)$ zu.

In Schritt S4 erfolgt die Blindwertkorrektur, indem die Lösungsmittelspektren $J_i^B(\lambda)$ von den jeweiligen gemessenen Spektren $J_i^R(\lambda)$ subtrahiert werden, wobei die blindwertkorrigierten, gemessenen Spektren $J_i(\lambda)$ erhalten werden. Die Blindwertkorrektur erfolgt nur, wenn die Routine eine Übereinstimmung aller Spektrengrenzen ($\lambda_{start}$ und $\lambda_{Ende}$) der Farbstoffspektren $J_i^R(\lambda)$ mit denen der Blindwertspektren $J_i^B(\lambda)$ feststellt. Andernfalls geht das Programm davon aus, dass die Blindwertkorrektur bereits durch den Anwender ausgeführt wurde und gibt einen entsprechenden Hinweis im Logfile aus.

Anschließend werden in Schritt S5 die spektral korrigierten und zertifizierten Spektren $I_i(\lambda)$ für die fünf Fluoreszenzstandards zusammen mit ihren kombinierten Unsicherheiten aus einem Binärfile eingelesen. Die Spektren $I_i(\lambda)$ wurden mit einem rückführbar kalibrierten Fluoreszenzspektrometer mit bekannter Messunsicherheit gemessen, blindwert- und spektral korrigiert und sind damit geräteunabhängig und rückführbar auf die radiometrischen Primärnormale "Schwarzer Strahler" oder "Kryoradiometer". Da für alle Einzelschritte bei der Gewinnung der Fluoreszenzkurven und für die benutzten Zertifikate Fehlerbilanzen aufgestellt wurden, kann für die Fluoreszenzstandards eine kombinierte wellenlängenahängige Unsicherheit der gemessenen Intensitäten angegeben werden.

In Schritt S6 wird - sofern erforderlich - die Scan-Schrittweite $\Delta\lambda_I$ der zertifizierten Spektren $I_i(\lambda)$ an die Scan-Schrittweite $\Delta\lambda_J$ der gemessenen Spektren $J_i(\lambda)$ angepasst. Dafür wird unter Verwendung einer Polynomfunktion dritten Grades (Spline) eine Interpolation der fehlenden Zwischenwerte $I_i(\lambda_k)$ zwischen jeweils acht aufeinander folgenden vorhandenen Datenpunkten (k-3... k... k+4) der Fluoreszenzstandards im (kleineren) Abstand $\Delta\lambda_I$ vorgenommen. Das Spline-Fenster wird nacheinander über alle Punkte eines jeden Spektrums $I_i(\lambda)$ bewegt. Im Ergebnis stehen die zertifizierten Spektren $I_i(\lambda)$ und die blindwertkorrigierten Spektren $J_i(\lambda)$ auf der gleichen Basis $\Delta\lambda$.

Figur 4 zeigt im unteren Teil die bei einer Kalibrierung am Fluorometer Perkin-Elmer LS 50 B erhaltenen Kurven der blindwertkorrigierten Emissionsspektren $J_i(\lambda)$ (unterbrochene Linien) sowie die der zertifizierten, intensitätsnormierten Emissionsspektren $I_i(\lambda)$ (durchgezogene Linien).

Nachfolgend wird in Schritt S7 gemäß Figur 3 eine auf den Bereich der Maxima eingeschränkte Analyse der Signal-/Rauschverhältnisse S/N der gemessenen Spektren $J_i(\lambda)$ durchgeführt. Die statistische Datenqualität spielt insofern eine Rolle, als dass das Rauschen der gemessenen Kurven direkt an die zu erstellende spektrale Korrekturfunktion weitergegeben wird und somit auch bei der spektralen Korrektur in ein jedes gemessene Spektrum einfließt. Für alle gemessenen Spektren $J_i(\lambda)$ werden im Bereich ihrer Maxima (Flankenintensität 97...100...97%) Parameter für Polynomgleichungen bis max. 9. Grades durch Auflösen der Matrices abgeschätzt. Für jeden Farbstoff i wird das Polynom mit der geringsten Abweichung von den Messdaten (Fehlerquadratsumme) als die dem Spektrum zugrunde liegende "rauschfreie wahre Kurve" angenommen. Die reziproke Standardabweichung der Messpunkte von der jeweils besten Polynomkurve wird als Rauschmaß im Bereich um das jeweilige Bandenmaximum angesehen. Liegt dieses unter dem empirisch vereinbarten Wert von beispielsweise 1000, so wird im Logfile eine Empfehlung vermerkt, wie oft der Benutzer die Messung des jeweiligen Chromophors wiederholen sollte, um zu einer Gesamtkorrekturfunktion mit hinreichend geringer Streuung zu gelangen.

Anschließend geht das Programm zu Schritt S8 über, wo eine Bestimmung der Überschneidungspunkte (genauer Überschneidungswellenlängen) $\lambda_{i/i+l}$ von jeweils zwei spektral aufeinander folgenden Emissionsspektren erfolgt (vgl. Fig. 2). Der Überschneidungspunkt $\lambda^I_{i/i+l}$ (bzw. $\lambda^J_{i/i+l}$) zweier Spektren ist diejenige Wellenlänge, an der sich die Intensität des normierten vorausgehenden (abnehmenden) Spektrums dem normierten nachfolgenden (zunehmenden) Spektrum am weitesten annähert, d. h. wo die Kurven einander kreuzen. Der Überschneidungspunkt $\lambda_{i/i+1}$ (z.B. $\lambda_{A/B}$) wird für jeweils einander überschneidende Spektrenpaare sowohl für die gemessenen Spektren $J_i(\lambda)/J_{i+l}(\lambda)$ : $\lambda^J_{i/i+1}$ (z.B. $J_A(\lambda)$, $J_B(\lambda)$) als auch die entsprechenden zertifizierten Spektren $I_i(\lambda)/I_{i+l}(\lambda)$: $\lambda^I i_{+l}$ (z.B. $I_A(\lambda)$, $I_B(\lambda)$) bestimmt und gemittelt. Der Überschneidungspunkt $\lambda_{i/i+l}$ aus beiden Paaren ergibt sich als nächster aufgerundeter, in allen vier benachbarten Spektren belegter Wellenlängenwert zum Mittel aus den beiden Paar-Mittelwerten $\lambda^I_{i/i+l}$ und $\lambda^J_{i/i+l}$.

Dann werden in Schritt S9 Verknüpfungsfaktoren $\alpha i$ für jeden Farbstoff i durch statistische Mittelung einander überlappender Spektralbereiche im Bereich $\pm\Delta\lambda$ um die jeweilige Überschneidungswellenlänge $\lambda_{i/i+l}$ aller vier benachbarten Spektren $I_i(\lambda)$, $I_{i+l}(\lambda)$, $J_i(\lambda)$ und $J_{i+l}(\lambda)$ gemäß den Gleichungen 1 bis 3 ermittelt. In diesem Schritt erfolgt implizit die Berechnung der Teilkorrekturfunktionen $F_i(\lambda)$ gemäß Gleichung 2 durch Quotientenbildung der korrigierten Spektren $I_t(\lambda)$ und der korrespondierenden gemessenen Spektren $J_i(\lambda)$ für die einzelnen Fluoreszenzstandards i. Die Verläufe der (ungewichteten) Teilkorrekturspektren $F_A(\lambda)$ bis $F_E(\lambda)$ für die Standards A bis E sind im oberen Teil der Figur 4 dargestellt.

$$\alpha_{i+1} = \frac{\sum_{\lambda}\left[\frac{F_i(\lambda)}{F_{i+1}(\lambda)}/\sigma^2_{i/i+1}(\lambda)\right]}{\sum_{\lambda} 1/\sigma^2_{i/i+1}(\lambda)} \quad (1)$$

$$F_i(\lambda) = \frac{I_i(\lambda)}{J_i(\lambda)} \quad (2)$$

$$\sigma^2_{i/i+1}(\lambda) = \left[\frac{1}{J_i(\lambda)} + \frac{1}{J_{i+1}(\lambda)}\right] \cdot \left[\frac{F_i(\lambda)}{F_{i+1}(\lambda)}\right]^2 \quad (3)$$

Für den ersten Verknüpfungsfaktor gilt $\alpha_l \equiv l$. Dabei wird der Summand in Gleichung 1 für den Verknüpfungsfaktor $\alpha_{i+l}$ nur jeweils über einen vorgegebenen optimierten spektralen Überlappungsbereich $\pm\Delta\lambda_{OL}$ um die jeweilige Überschneidungswellenlänge $\lambda_{i/i+l}$ ermittelt. Im vorliegenden Beispiel erfolgt die statistische Mittelung zur Berechnung von $\alpha_{\iota+\iota}$ gemäß Gleichung 1 über einen beidseitig an die jeweiligen Überschneidungswellenlängen $\lambda_{i/i+l}$ anschließenden Bereich von $\pm 8$ nm. Wenn beispielsweise der Überschneidungspunkt $\lambda_{A/B}$ bei 350 nm liegt, wird $\alpha_B$ durch statistische Mittelung der Teilkorrekturfunktionen $F_A(\lambda)$ und $F_B(\lambda)$ über den Bereich 350 $\pm$ 8 nm ermittelt.

In Schritt S10 werden Anschlussfaktoren $\beta_i$ für jeden Fluoreszenzstandard i gemäß Gleichung 4 durch Multiplikation aller spektral vorhergehender Verknüpfungsfaktoren $\alpha_i$ ermittelt. Aus $\alpha_1$ =1 folgt $\beta_l$ = l.

$$\beta_i = \prod_{k=1}^{i} \alpha_k \qquad (4)$$

Schließlich erfolgt in den Schritten S11 bis S13 die Berechnung der Gesamtkorrekturfunktion F(λ). Obwohl diese Schritte gemäß dem verwendeten Programmalgorithmus keine voneinander separierten Schritte darstellen (sondern einen einzigen Rechenschritt bestehend in der Summation nach Gleichung 5), sind S11 bis S13 in Figur 3 für ein besseres Verständnis als getrennte Schritte dargestellt. Demnach werden in Schritt S11 zunächst die Werte der Funktion F(λ) in einem vorgebbaren Verknüpfungsbereich $\lambda_{i/i+l} \pm \Delta\lambda_{LK}$ um die jeweiligen Überschneidungspunkte $\lambda_{i/i+1}$ gemäß den Gleichungen 5 und 6 ermittelt. In dem Verknüpfungsbereich $\lambda_{i/i+l} \pm \Delta\lambda_{LK}$ erfolgt somit eine statistische Mittelung der einander jeweils überlappenden, durch ßi gewichteten Teilkorrekturfunktionen $F_i(\lambda)$. Im vorliegenden Beispiel wird gemäß einem voreingestellten Ausführungsmodus des Programms Gleichung 5 jeweils nur genau für die in S8 ermittelten Überschneidungswellenlängen $\lambda_{i/i+l}$ angewendet, das heißt $\Delta\lambda_{LK} = 0$.

$$F(\lambda) = \frac{\sum_{i=1}^{N} \beta_i \cdot F_i(\lambda)/\sigma^2(\lambda)}{\sum_{i=1}^{N} 1/\sigma^2(\lambda)} \qquad (5)$$

mit

$$\sigma^2(\lambda) = \frac{[\beta_i F_i(\lambda)]^2}{J_i(\lambda)} \qquad (6)$$

Alle anderen Punkte der Korrekturfunktion F(A), das heißt in den Bereichen $\lambda \neq \lambda_{i/i+l} \pm \Delta\lambda_{LK}$, werden nach Schritt S12 gemäß dem voreingestellten Ausführungsmodus des Programms nicht gemittelt, sondern einfach nach Gleichung 7 berechnet. (Dies ist gleichbedeutend mit einer Summierung nach Gleichung 5 über nur ein i.) Mit anderen Worten entspricht die Gesamtkorrekturfunktion F(λ) außerhalb der Verknüpfungsbereiche $\lambda_{i/i+l} \pm \Delta\lambda_{LK}$, insbesondere für alle Wellenlängen außerhalb der Überschneidungspunkte $\lambda_{i/i+l}$, den Teilkorrekturfunktionen Fi(A), gewichtet mit den für diese ermittelten Faktoren $\beta_i$.

$$F(\lambda) = \beta_i \cdot F_i(\lambda) \qquad (7)$$

Mit der Übergabe entsprechender Steuervariablen durch den Anwender lässt sich der Wirkungsbereich der Gleichungen 5 und 6 im Programm optional auch auf breitere spektrale Verknüpfungsbereiche $\lambda_{i/i+1} \pm \Delta\lambda_{LK}$ um die Schnittwellenlängen ausweiten. Dass dies aber häufig nicht von Vorteil ist, ist dem Beispieldatensatz in Figur 4 (oben) zu entnehmen, wo die Teilkorrekturfunktionen $F_C(\lambda)$ und $F_D(\lambda)$ jeweils an ihren Anfängen und der Teilquotient $F_E(\lambda)$ am Ende deutliche Abweichungen vom stetigen Verhalten der Kurven in ihrem sonstigen Verlauf zeigen. Für die in Figur 4 oben ebenfalls dargestellte Emissionskorrekturfunktion F(A) wurde deshalb das Programm im Default-Mode benutzt, das heißt, lediglich die dunkel unterlegten Teile der Einzelquotienten $F_i(\lambda)$ zwischen den Schnittwellenlängen $\lambda_{i/i+l}$ wurden mit den Anschlussfaktoren $\beta_i$ gemäß Gleichung 7 verrechnet und an den Schnittstellen $\lambda_{i/i+l}$ wurde zwischen den beiden angrenzenden Teilquotienten gemäß Gleichung 5 gemittelt und so die Gesamtkorrekturfunktion F(A) (schwarze Linie) erhalten. Sie weist erkennbar einen glatten stetigen Verlauf auf. Wegen ($\alpha_i$ =1 und $\beta_i$=I entspricht F(λ) bis zum ersten Überschneidungspunkt $\lambda_{A/B}$ der mit $\beta_A$ gewichteten Teilkorrekturfunktion $F_A(\lambda)$.

In Schritt S13 werden die Werte der verketteten Gesamtkorrekturfunktion F(A) als ASCII-Tabelle im File "CorrF.TXT" ausgegeben und in einem Logfile "LINKLOG#.TXT" alle Aktionen sowie Fehlermeldungen des Programms dokumentiert.

Alle auf einem in dieser Weise kalibrierten Lumineszenzspektrometer und unter den Kalibriereinsteilungen gemessenen Spektren werden - nach Subtraktion entsprechender Blindwertspektren - durch einfache Multiplikation mit der Korrekturfunktion F($\lambda$) spektral korrigiert. Werte von gemessenem Spektrum und der spektralen Korrekturfunktion F($\lambda$) dürfen nur miteinander multipliziert werden, wenn sie der gleichen Wellenlänge zugeordnet sind, das heißt der gleichen Basis $\Delta\lambda$. Man erhält auf diese Weise rückführbare, spektral korrigierte Lumineszenzspektren in relativen Intensitätseinheiten.

Das vorbeschriebene Beispiel bezieht sich auf die Erstellung einer Gesamtkorrekturfunktion für die Emission unter Verwendung von Emissionsstandards. Wird ein Satz von Anregungsstandards auf einem Lumineszenzspektrometer auf gleiche Weise gemessen und die erhaltenen Anregungsspektren mit einem Datensatz für die spektral korrigierten (zertifizierten) Anregungsspektren der Fluoreszenzstandards entsprechend dem Programmablauf in Figur 3 verrechnet, so wird eine spektrale Anregungskorrekturfunktion erhalten.

Figur 5 zeigt am Beispiel der Fluoreszenz von Chininsulfat die Anwendung der gemäß den Figuren 3 und 4 erhaltenen Gesamtkorrekturfunktion F(A). Die durchgezogene Kurve zeigt das auf einem Fluorometer (SPEX Fluorolog) bei einer Anregungswellenlänge von 348 nm gemessene, spektral unkorrigierte, blindwertkorrigierte Emissionsspektrum J($\lambda$). Nach Multiplikation mit der für das Fluorometer durch Anwendung des erfindungsgemäßen Fluoreszenzstandard-Kits erhaltenen Emissionskorrekturfunktion F($\lambda$) wurde das spektral korrigierte Emissionsspektrum (gepunktete Kurve) erhalten. Es liegt im Unterschied zum spektral unkorrigierten Spektrum in allen Bereichen innerhalb der vom NIST vorgegebenen Fehlergrenzen (graue Dreiecke).

In Figur 6 wird deutlich, welchen Einfluss die spektrale Korrektur auf die spektrale Lage des Fluoreszenzmaximums haben kann. Das Rohemissionsspektrum J($\lambda$) von DCM in Acetonitril wurde auf einem Fluorometer LS 50 B der Firma Perkin Elmer aufgenommen. Durch die spektrale Emissionskorrektur (Multiplikation des gemessenen Rohspektrums J($\lambda$) mit der Emissionskorrekturfunktion F($\lambda$) wird das um 11 nm bathochrom verschobene, spektral korrigierte Spektrum erhalten (gepunktete Kurve). Sie weicht nur geringfügig von dem Spektrum ab, das mit dem Fluorometer SLM 8100 gemessen wurde und mit einer mittels Strahldichte-Transfernormal erstellten Emissionskorrekturfunktion $F(\lambda)_{tr}$ spektral korrigiert wurde (graue Kurve).

**Bezugszeichen-/Abkürzungsliste**

| | |
|---|---|
| i | fortlaufende Nr. eines Fluoreszenzstandards im Kit mit $1 \leq i \leq N$ |
| $I_i(\lambda)$ | spektral korrigiertes (zertifiziertes) Fluoreszenzspektrum des Fluoreszenzstandards i |
| $J_i(\lambda)$ | gemessenes, blindwertkorrigiertes Fluoreszenzspektrum |
| $F_i(\lambda)$ | Teilkorrekturfunktion des Fluoreszenzstandards i |
| $F(\lambda)$ | Gesamtkorrekturfunktion |
| $\lambda_{i/i+1}$ | Überschneidungswellenlängen aufeinander folgender Spektren des i-ten und (i+1)-ten Standards |
| $\alpha_i$ | Verknüpfungsfaktor benachbarter Teilkorrekturfunktionen |
| $\beta_i$ | Anschlussfaktor |
| $\lambda_{i/i+1} \pm \Delta\lambda_{OL}$ | spektraler Überlappungsbereich um die Überschneidungswellenlängen |
| $\lambda_{i/i+1} \pm \Delta\lambda_{LK}$ | spektraler Verknüpfungsbereich um die Überschneidungswellenlängen |

**Patentansprüche**

**1.** Verfahren zur Kalibrierung eines Photolumineszenzmesssystems, insbesondere eines Fluoreszenzmesssystems, mit den Schritten

(a) Messung von Fluoreszenzspektren Ji($\lambda$) einer Mehrzahl von Fluoreszenzstandards i mit dem zu kalibrierenden Photolumineszenzmesssystem, wobei die Fluoreszenzstandards i derart gewählt werden, dass ihre spektral korrigierten und normierten Fluoreszenzspektren $I_i(\lambda)$ zusammen einen vorgegebenen Spektralbereich abdecken derart, dass Fluoreszenzbanden der korrigierten, jeweils spektral aufeinander folgenden Fluoreszenzspektren $I_i(\lambda)$ an ihren Überschneidungswellenlängen $\lambda_{i/i+l}$ mindestens eine vorgegebene Mindestintensität aufweisen;

(b) Berechnung von Verknüpfungsfaktoren $\alpha_i$ durch statistische Mittelung aufeinander folgender Teilkorrekturfunktionen $F_i(\lambda)$, wobei die Teilkorrekturfunktionen $F_i(\lambda)$ durch Quotientenbildung aus den gemessenen Fluoreszenzspektren $J_i(\lambda)$ und den entsprechenden korrigierten Fluoreszenzspektren $I_i(\lambda)$ der Fluoreszenzstandards i gebildet werden und wobei die statistische Mittelung über einen vorgegebenen, begrenzten Überlappungsbereich $\lambda_{i/i+l} \pm \Delta\lambda_{OL}$ um die gegenseitige Überschneidungswellenlänge $\lambda_{i/i+l}$ erfolgt; und

(c) Ermittlung einer Gesamtkorrekturfunktion F(λ) für den vorgegebenen Spektralbereich durch Verknüpfen der in Abhängigkeit der Verknüpfungsfaktoren $\alpha_i$ gewichteten Teilkorrekturfunktionen $F_i(\lambda)$.

**2.** Verfahren nach Anspruch 1, **dadurch gekennzeichnet, dass** der spektrale Überlappungsbereich $\lambda_{i/i+I} \pm\Delta\lambda_{OL}$, für den die Berechnung der Verknüpfungsfaktoren $\alpha_i$ durchgeführt wird, einem Bereich von höchstens ±12 nm, insbesondere höchstens ±10 nm, bevorzugt von höchstens ±8 nm, um die Überschneidungswellenlängen $\lambda_{i/i+I}$ entspricht.

**3.** Verfahren nach Anspruch 1 oder 2, **dadurch gekennzeichnet, dass** der Verlauf der Gesamtkorrekturfunktion F(λ) in einem vorgegebenen, eng begrenzten Verknüpfungsbereich $\lambda_{i/i+I} \pm\Delta\lambda_{LK}$ um die Überschneidungswellenlängen $\lambda_{i/i+I}$ durch statistische Mittelung der gewichteten, aufeinander folgenden Teilkorrekturfunktionen $F_i(\lambda)$ berechnet wird.

**4.** Verfahren nach Anspruch 3, **dadurch gekennzeichnet, dass** der Verlauf der Gesamtkorrekturfunktion F(λ) außerhalb des vorgegebenen Verknüpfungsbereichs $\lambda_{i/i+I} \pm\Delta\lambda_{LK}$ um die Überschneidungswellenlängen $\lambda_{i/i+I}$ den Verläufen der gewichteten, nicht-gemittelten Teilkorrekturfunktionen $F_i(\lambda)$ entspricht.

**5.** Verfahren nach einem der Ansprüche 3 oder 4, **dadurch gekennzeichnet, dass** der vorgegebene Verknüpfungsbereich $\lambda_{i/i+I} \pm\Delta\lambda_{LK}$ um die Überschneidungswellenlängen $\lambda_{i/i+I}$ ±5 nm, insbesondere ±2 nm, vorzugsweise nur die jeweiligen Überschneidungswellenlängen $\lambda_{i/i+I}$ selbst umfasst.

**6.** Verfahren nach einem der Ansprüche 1 bis 5, **dadurch gekennzeichnet, dass** der vorgegebene Spektralbereich der Gesamtkorrekturfunktion F(λ) den UV/vis/NIR-Bereich zumindest teilweise abdeckt.

**7.** Verfahren nach einem der Ansprüche 1 bis 6,

**dadurch gekennzeichnet, dass** der vorgegebene Spektralbereich einer Gesamtkorrekturfunktion F(λ) für eine Emissionskorrektur von 310 bis 730 nm reicht, insbesondere von 300 bis 950 nm, und für eine Anregungskorrektur von 280 bis 600 nm, insbesondere von 240 bis 800 nm.

**8.** Verfahren nach einem der Ansprüche 1 bis 7, **dadurch gekennzeichnet, dass** die vorgegebene Mindestintensität der Fluoreszenzbanden jeweils spektral aufeinander folgender, korrigierter Fluoreszenzspektren $I_i(\lambda)$ an ihren Überschneidungswellenlängen $\lambda_{i/i+I}$ im UV /vis-Spektralbereich mit $\lambda \leq 700$ nm mindestens 20 %, insbesondere mindestens 25 %, bevorzugt mindestens 30 %, der maximalen Intensität der einander überlappenden flankierenden Banden beträgt.

**9.** Verfahren nach einem der Ansprüche 1 bis 8, **dadurch gekennzeichnet, dass** die vorgegebene Mindestintensität der Fluoreszenzbanden jeweils spektral aufeinander folgender, korrigierter Fluoreszenzspektren $I_i(\lambda)$ an ihren Überschneidungswellenlängen $\lambda_{i/i+I}$ im NIR-Spektralbereich mit $\lambda > 700$ nm mindestens 10 %, insbesondere etwa 15 % der maximalen Intensität der einander überlappenden flankierenden Banden beträgt.

**10.** Verfahren nach einem der Ansprüche 1 bis 9, **dadurch gekennzeichnet, dass** Intensitäten der spektral korrigierten Fluoreszenzspektren $I_i(\lambda)$ innerhalb des spektralen Überlappungsbereichs $\lambda_{i/i+I} \pm\Delta\lambda_{OL}$ für den die Berechnung der Verknüpfungsfaktoren $\alpha_i$ durchgeführt wird, im UV/vis-Spektralbereich mit $\lambda \leq$ 700 nm mindestens 10 %, insbesondere von mindestens 15 %, bevorzugt von mindestens 20 % bezogen auf die maximalen Intensitäten der einander überlappenden flankierenden Banden betragen.

**11.** Verfahren nach einem der Ansprüche 1 bis 10, **dadurch gekennzeichnet, dass** die Berechnung der Teilkorrekturfunktionen $F_i(\lambda)$ durch Division der korrigierten Fluoreszenzspektren $I_i(\lambda)$ durch die entsprechenden gemessenen Fluoreszenzspektren $J_i(\lambda)$ erfolgt und eine Korrektur eines gemessenen, insbesondere blindwertkorrigierten Spektrums durch Wellenlängen-korrelierte Multiplikation mit der Gesamtkorrekturfunktion F(λ) erfolgt.

**12.** Verfahren nach einem der Ansprüche 1 bis 11, **dadurch gekennzeichnet, dass** eine wellenlängenabhängige kombinierte Unsicherheit für den vorgegebenen Spektralbereich der Gesamtkorrekturfunktion F(λ) aus den jeweiligen kombinierten Unsicherheiten der korrigierten Spektren für die einzelnen Fluorophore berechnet wird.

## Claims

1. A method for calibrating a photoluminescence measurement system, in particular a fluorescence measurement system, comprising the following steps:

   (a) measuring fluorescence spectra $J_i(\lambda)$ of a plurality of fluorescence standards i using the photoluminescence measurement system to be calibrated, wherein the fluorescence standards i are selected so that their combined spectrally corrected and normalized fluorescence spectra $I_i(\lambda)$ cover a predefined spectral range in such a way that fluorescence bands of the corrected, spectrally consecutive fluorescence spectra $I_i(\lambda)$ have at least a predefined minimum intensity at their crossover wavelengths $\lambda_{i/i+1}$;
   (b) calculating combination factors $\alpha_i$ through statistical averaging of consecutive partial correction functions $F_i(\lambda)$, wherein the partial correction functions $F_i(\lambda)$ are formed by forming the quotient of the measured fluorescence spectra $J_i(\lambda)$ and the corresponding corrected fluorescence spectra $I_i(\lambda)$ of the fluorescence standards i, and wherein the statistical averaging takes place over a predefined, limited overlap region $\lambda_{i/i+1} \pm\Delta\lambda_{OL}$ about the mutual crossover wavelengths $\lambda_{i/i+1}$; and
   (c) determining a total correction function $F(\lambda)$ for the predefined spectral range by combination of the partial correction functions $F_i(\lambda)$, which are weighted according to the combination factors $\alpha_i$.

2. The method according to claim 1, **characterized in that** the spectral overlap region $\lambda_{i/i+1} \pm\Delta\lambda_{OL}$, for which the combination factors $\alpha_i$ are calculated, corresponds to a range of at most ±12 nm, in particular at most ±10 nm, preferably at most ±8 nm, about the crossover wavelengths $\lambda_{i/i+1}$.

3. The method according to claim 1 or 2, **characterized in that** the progression of the total correction function $F(\lambda)$ is calculated in a predefined, narrowly limited combination region $\lambda_{i/i+1} \pm\Delta\lambda_{LK}$ about the crossover wavelengths $\lambda_{i/i+1}$ through statistical averaging of the weighted, consecutive partial correction functions $F_i(\lambda)$.

4. The method according to claim 3, **characterized in that** the progression of the total correction function $F(\lambda)$ outside the predefined combination region $\lambda_{i/i+1} \pm\Delta\lambda_{LK}$ about the crossover wavelengths $\lambda_{i/i+1}$ corresponds to the progressions of the weighted, non-averaged partial correction functions $F_i(\lambda)$.

5. The method according to either claim 3 or 4, **characterized in that** the predefined combination region $\lambda_{i/i+1} \pm\Delta\lambda_{LK}$ about the crossover wavelengths $\lambda_{i/i+1}$ includes ±5 nm, in particular ±2 nm, preferably only the corresponding crossover wavelengths $\lambda_{i/i+1}$ themselves.

6. The method according to any one of claims 1 to 5, **characterized in that** the predefined spectral range of the total correction function $F(\lambda)$ at least partially covers the UV/vis/NIR spectral range.

7. The method according to any one of claims 1 to 6, **characterized in that** the predefined spectral range of a total correction function $F(\lambda)$ for correcting the emission extends from 310 to 730 nm, in particular from 300 to 950 nm, and for an excitation correction of 280 to 600 nm, in particular from 240 to 800 nm.

8. The method according to any one of claims 1 to 7, **characterized in that** the predefined minimum intensity of the fluorescence bands of spectrally consecutive, corrected fluorescence spectra $I_i(\lambda)$ at their crossover wavelengths $\lambda_{i/i+1}$ in the UV/vis/NIR spectral range with $\lambda \leq 700$ nm is at least 20%, in particular at least 25%, preferably at least 30%, of the maximum intensity of the mutually overlapping flanking bands.

9. The method according to any one of claims 1 to 8, **characterized in that** the predefined minimum intensity of the fluorescence bands of spectrally consecutive, corrected fluorescence spectra $I_i(\lambda)$ at their crossover wavelengths $\lambda_{i/i+1}$ in the NIR spectral range with $\lambda > 700$ nm is at least 10%, in particular approximately 25% of the maximum intensity of the mutually overlapping flanking bands.

10. The method according to any of claims 1 to 9, **characterized in that** intensities of the spectrally corrected fluorescence

spectra $I_i(\lambda)$ within the spectral overlap range $\lambda_{i/i+1} \pm\Delta\lambda_{OL}$ for which the combination factors $\alpha_i$ are calculated, in the UV/vis spectral range with $\lambda \leq 700$ nm are at least 10%, in particular at least 15%, preferably at least 20%, in relation to the maximum intensities of the mutually overlapping flanking bands.

**11.** The method according to any one of claims 1 to 10, **characterized in that** the partial correction functions $F_i(\lambda)$ are calculated by dividing the corrected fluorescence spectra $I_i(\lambda)$ by the corresponding measured fluorescence spectra $J_i(\lambda)$, and a measured spectrum, in particular a spectrum corrected for a blank value, is corrected by wavelength-correlated multiplication with the total correction function $F(\lambda)$.

**12.** The method according to any one of claims 1 to 11, **characterized in that** a wavelength-dependent combined uncertainty for the predefined spectral range of the total correction function $F(\lambda)$ is calculated from the respective combined uncertainties of the corrected spectra for the individual fluorophores.

## Revendications

**1.** Procédé de calibrage d'un système de mesure de photoluminescence, plus particulièrement d'un système de mesure de fluorescence, comprenant les étapes suivantes

(a) mesure de spectres de fluorescence Ji(À) d'une pluralité de standards de fluorescence i avec le système de mesure de photoluminescence à calibrer, dans lequel les standards de fluorescence i sont choisis de façon à ce que leurs spectres de fluorescence $I_i(\lambda)$ corrigés et normalisés spectralement couvrent ensemble un domaine spectral prédéterminé de sorte que les bandes de fluorescence des spectres de fluorescence corrigés, se succédant spectralement $I_i(\lambda)$ présentent, au niveau de leurs longueurs d'onde de chevauchement $\lambda_{i/i+1}$, au moins une intensité minimale prédéterminée ;
(b) calcul de facteurs de liaison $\alpha_i$ par moyennage statistique de fonctions de correction partielles Fi(À) successives, dans lequel les fonctions de correction partielles Fi(À) sont formées par la formation de quotient à partir des spectres de fluorescence Ji(À) mesurés et des spectres de fluorescences corrigés $I_i(\lambda)$ correspondants des standards de fluorescence i et dans lequel le moyennage statistique s'effectue sur un domaine de chevauchement prédéterminé limité $\lambda_{i/i+1} \pm \Delta\lambda_{OL}$ autour de la longueur d'onde de chevauchement mutuelle $\lambda_{i/i+1}$ ; et
(c) détermination d'une fonction de correction globale F(À) pour le domaine spectral prédéterminé par liaison des fonctions de correction partielles $F_i(\lambda)$ pondérés en fonction des facteurs de liaison $\alpha_i$.

**2.** Procédé selon la revendication 1, **caractérisé en ce que** le domaine de chevauchement spectral $\lambda_{i/i+1} \pm\Delta\lambda_{OL}$, pour lequel le calcul des facteurs de liaison $\alpha_i$ est effectué, correspond à un domaine de $\pm$12 nm maximum, plus particulièrement de $\pm$10 nm maximum, de préférence de $\pm$8 nm maximum, autour des longueurs d'onde de chevauchement $\lambda_{i/i+1}$.

**3.** Procédé selon la revendication 1 ou 2, **caractérisé en ce que**
l'évolution de la fonction de correction globale F(À) dans un domaine de liaison prédéterminé et étroitement limité $\lambda_{i/i+1} \pm\Delta\lambda_{LK}$ autour des longueurs d'onde de chevauchement $\lambda_{i/i+1}$ est calculé par moyennage statistique des fonctions de correction partielles pondérées Fi(À) successives.

**4.** Procédé selon la revendication 3, **caractérisé en ce que** l'évolution de la fonction de correction globale F(À) en dehors du domaine de liaison prédéterminé $\lambda_{i/i+1} \pm\Delta\lambda_{LK}$ autour des longueurs d'onde de chevauchement $\lambda_{i/i+1}$ correspond aux évolutions des fonctions de correction partielles pondérées Fi(À) non moyennées.

**5.** Procédé selon l'une des revendications 3 ou 4, **caractérisé en ce que**
le domaine de liaison prédéterminé $\lambda_{i/i+1} \pm\Delta\lambda_{LK}$ autour des longueurs d'onde de chevauchement $\lambda_{i/i+1} \pm$5 nm, plus particulièrement $\pm$2 nm, comprend de préférence uniquement les longueurs d'onde de chevauchement respectives $\lambda_{i/i+1}$ elles-mêmes.

**6.** Procédé selon l'une des revendications 1 à 5, **caractérisé en ce que**
le domaine spectral prédéterminé de la fonction de correction globale F(À) couvre au moins partiellement le domaine UV/vis/NIR.

**7.** Procédé selon l'une des revendications 1 à 6, **caractérisé en ce que**
le domaine spectral prédéterminé d'une fonction de correction globale F(À) pour une correction d'émission va de

310 à 730 nm, plus particulièrement de 300 à 950 nm, et pour une correction d'excitation va de 280 à 600 nm, plus particulièrement de 240 à 800 nm.

8. Procédé selon l'une des revendications 1 à 7, **caractérisé en ce que** l'intensité minimale prédéterminée des bandes de fluorescence des spectres de fluorescences corrigés $I_i(\lambda)$ respectifs spectralement successifs au niveau de leurs longueurs d'onde de chevauchement $\lambda_{i/i+1}$ représente, dans le domaine spectral UV/vis avec $\lambda \leq 700$ nm, au moins 20 %, plus particulièrement au moins 25 %, de préférence au moins 30 % de l'intensité maximale des bandes de flanc chevauchantes.

9. Procédé selon l'une des revendications 1 à 8, **caractérisé en ce que** l'intensité minimale prédéterminée des bandes de fluorescence de spectres de fluorescence corrigés $I_i(\lambda)$ respectifs spectralement successifs au niveau de leurs longueurs d'onde de chevauchement $\lambda_{i/i+1}$ représente, dans le domaine spectral NIR avec $\lambda > 700$ nm, au moins 10 %, plus particulièrement environ 15 % de l'intensité maximale des bandes de flanc chevauchantes.

10. Procédé selon l'une des revendications 1 à 9, **caractérisé en ce que**
les intensités des spectres de fluorescence corrigés $I_i(\lambda)$ dans le domaine de chevauchement spectral $\lambda_{i/i+1} \pm\Delta\lambda_{OL}$, pour lequel le calcul des facteurs de liaison $\alpha_i$ est effectué, représentent, dans le domaine spectral UV/vis avec $\lambda \leq 700$ nm, au moins 10 %, plus particulièrement au moins 15 %, de préférence au moins 20 % de l'intensité maximale des bandes de flanc chevauchantes.

11. Procédé selon l'une des revendications 1 à 10, **caractérisé en ce que**
le calcul des fonctions de correction partielles Fi(À) comprend une division des spectres de fluorescence corrigés $I_i(\lambda)$ par les spectres de fluorescence mesurés Ji(À) correspondants et une correction d'un spectre mesuré, plus particulièrement d'une valeur à blanc corrigée, comprend une multiplication corrélée à la longueur d'onde avec la fonction de correction globale F(À).

12. Procédé selon l'une des revendications 1 à 11, **caractérisé en ce que**
une incertitude combinée en fonction de la longueur d'onde pour le domaine spectral de la fonction de correction globale F(À) est calculée à partir des incertitudes combinées respectives des spectres corrigés pour les différents fluorophores.

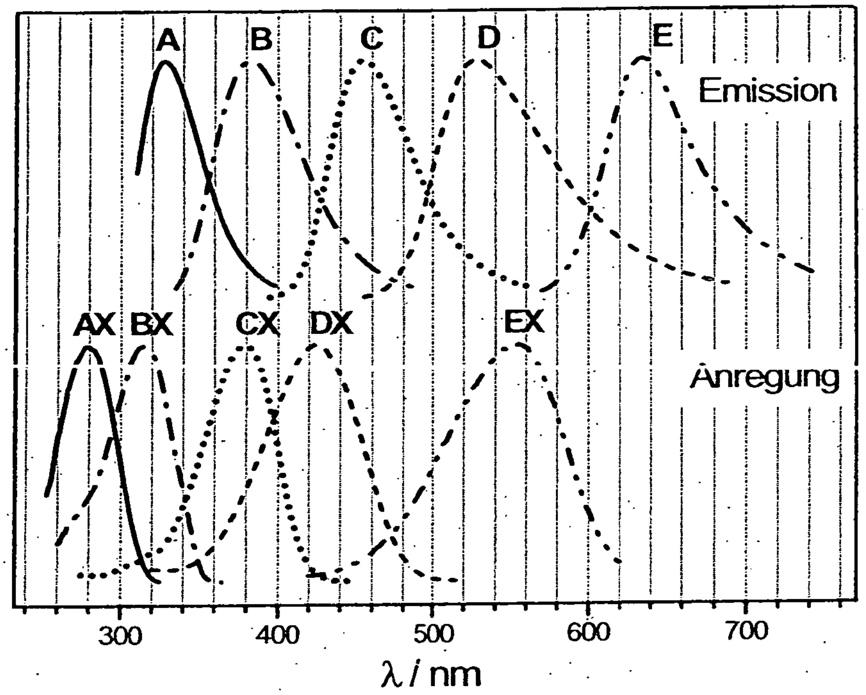
A
B
C
D
E
Emission
AX
BX
CX
DX
EX
Anregung
300
400
500
600
700
λ / nm

Fig. 1

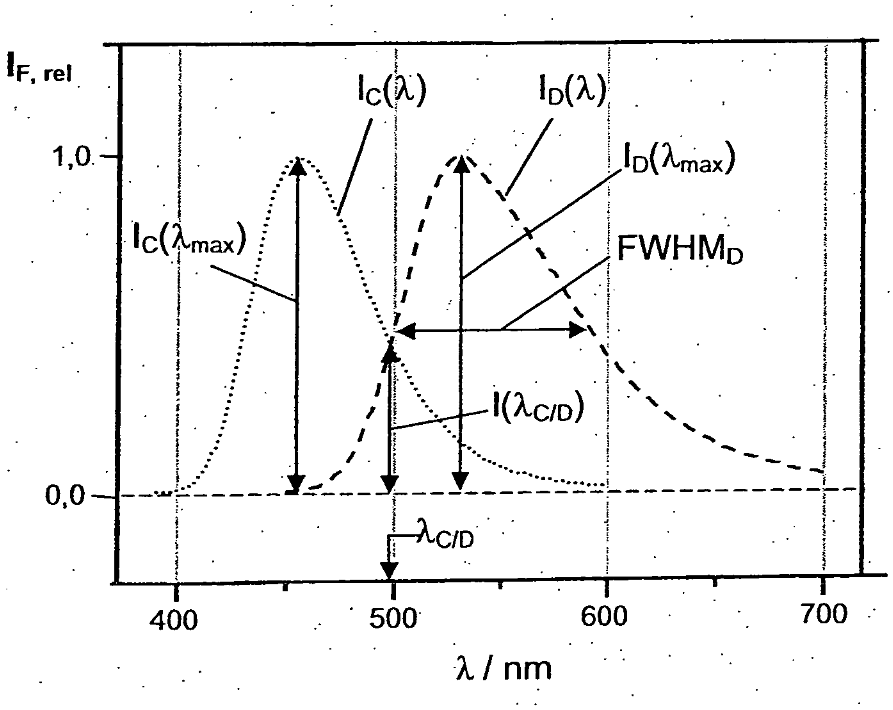
$I_{F, rel}$
1,0
0,0
$I_C(\lambda)$
$I_D(\lambda)$
$I_D(\lambda_{max})$
$I_C(\lambda_{max})$
$FWHM_D$
$I(\lambda_{C/D})$
$\lambda_{C/D}$
400
500
600
700
λ / nm

Fig. 2

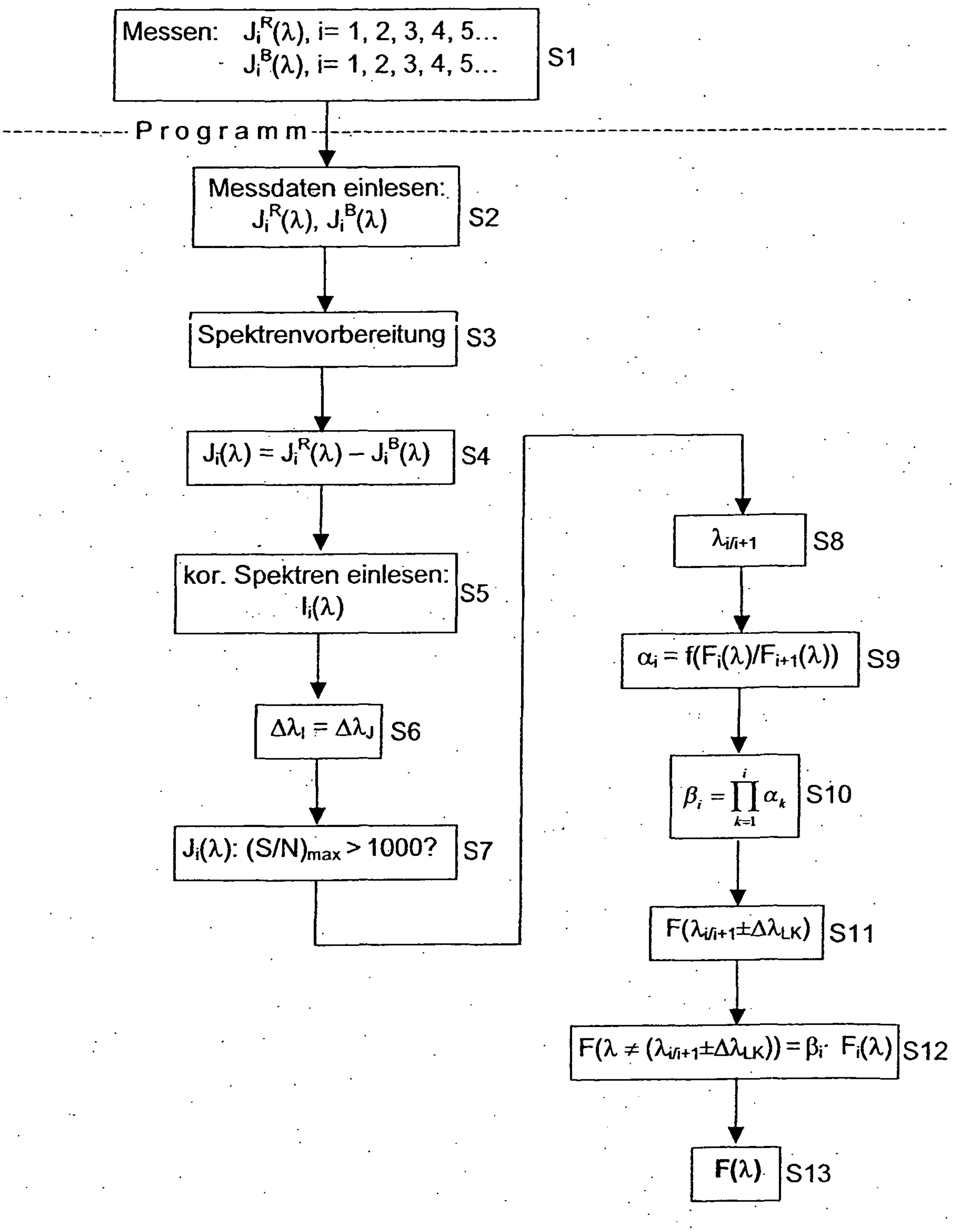
Messen: $J_i^R(\lambda)$, i= 1, 2, 3, 4, 5...
$J_i^B(\lambda)$, i= 1, 2, 3, 4, 5...
S1
Programm
Messdaten einlesen: $J_i^R(\lambda)$, $J_i^B(\lambda)$
S2
Spektrenvorbereitung
S3
$J_i(\lambda) = J_i^R(\lambda) - J_i^B(\lambda)$
S4
kor. Spektren einlesen: $I_i(\lambda)$
S5
$\Delta\lambda_I = \Delta\lambda_J$
S6
$J_i(\lambda)$: $(S/N)_{max} > 1000$?
S7
$\lambda_{i/i+1}$
S8
$\alpha_i = f(F_i(\lambda)/F_{i+1}(\lambda))$
S9
$\beta_i = \prod_{k=1}^{i} \alpha_k$
S10
$F(\lambda_{i/i+1} \pm \Delta\lambda_{LK})$
S11
$F(\lambda \neq (\lambda_{i/i+1} \pm \Delta\lambda_{LK})) = \beta_i \cdot F_i(\lambda)$
S12
$F(\lambda)$
S13

Fig. 3

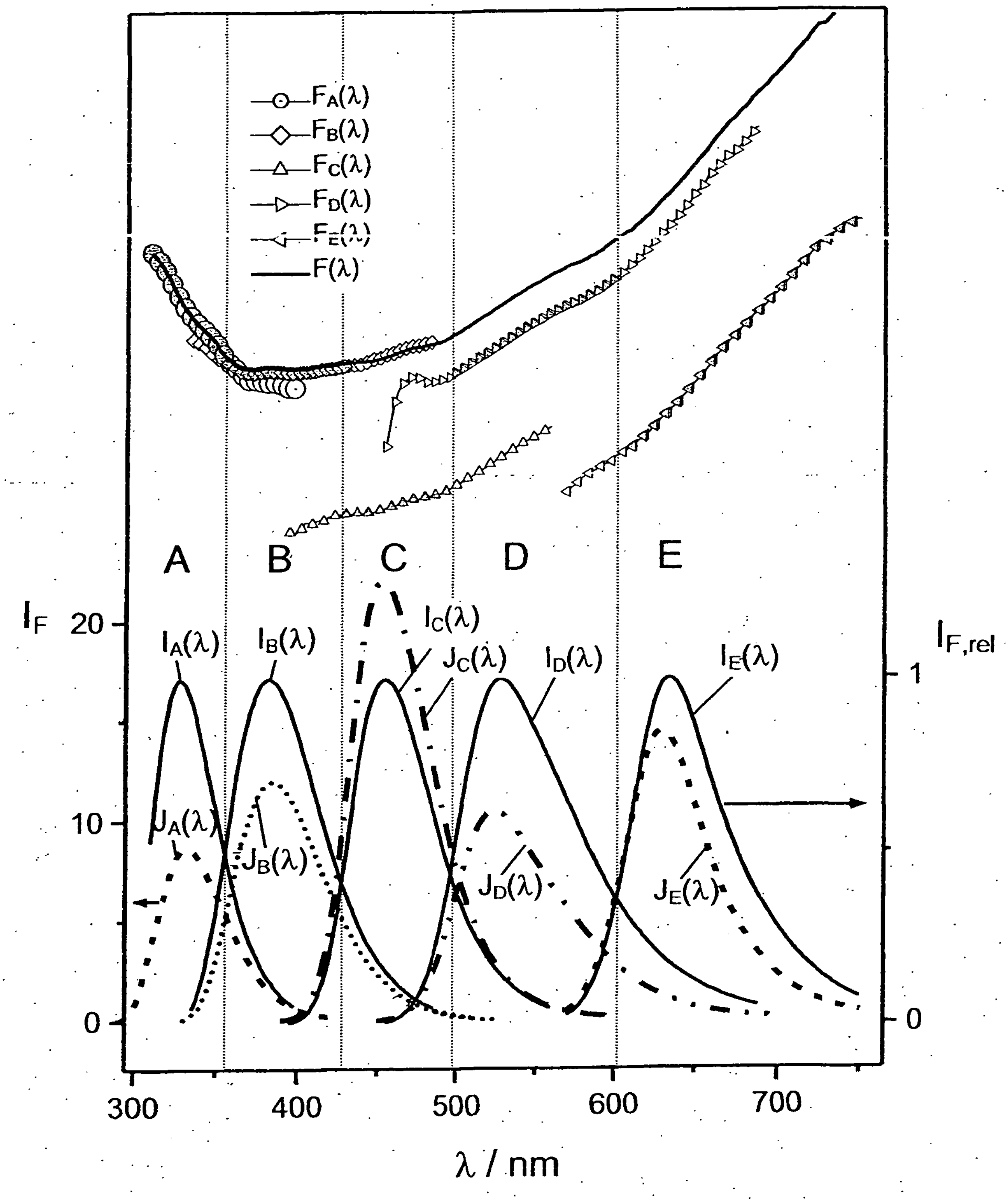

FA(λ)
FB(λ)
FC(λ)
FD(λ)
FE(λ)
F(λ)
A
B
C
D
E
IF
IF,rel
IA(λ)
IB(λ)
IC(λ)
JC(λ)
ID(λ)
IE(λ)
JA(λ)
JB(λ)
JD(λ)
JE(λ)
0
10
20
1
0
300
400
500
600
700
λ / nm


Fig. 4

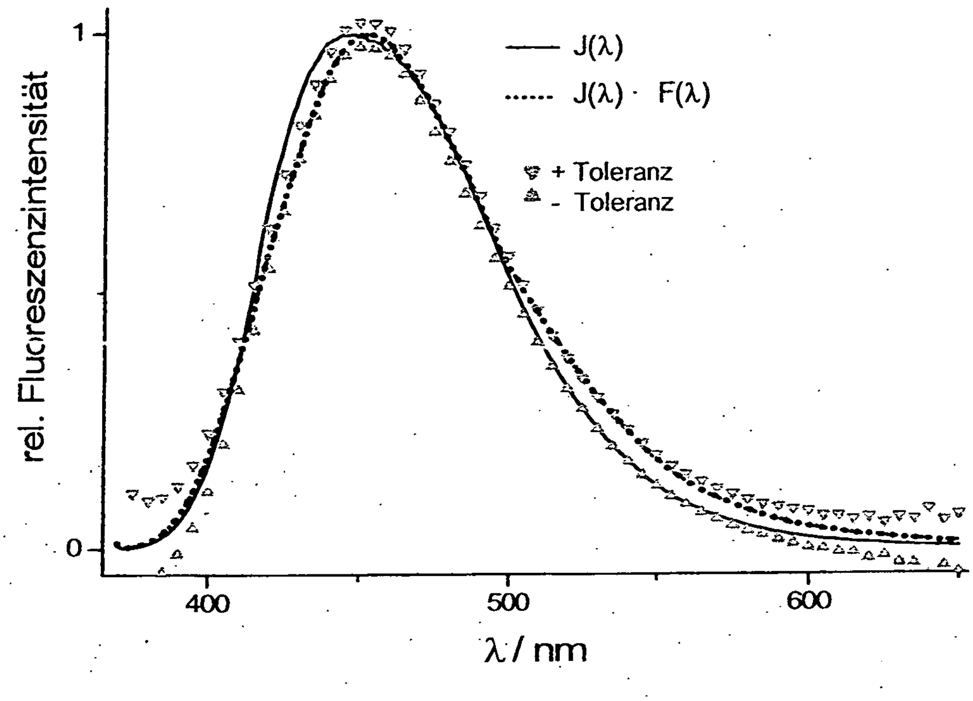
1
0
rel. Fluoreszenzintensität
400
500
600
λ / nm
J(λ)
J(λ) · F(λ)
+ Toleranz
- Toleranz

Fig. 5

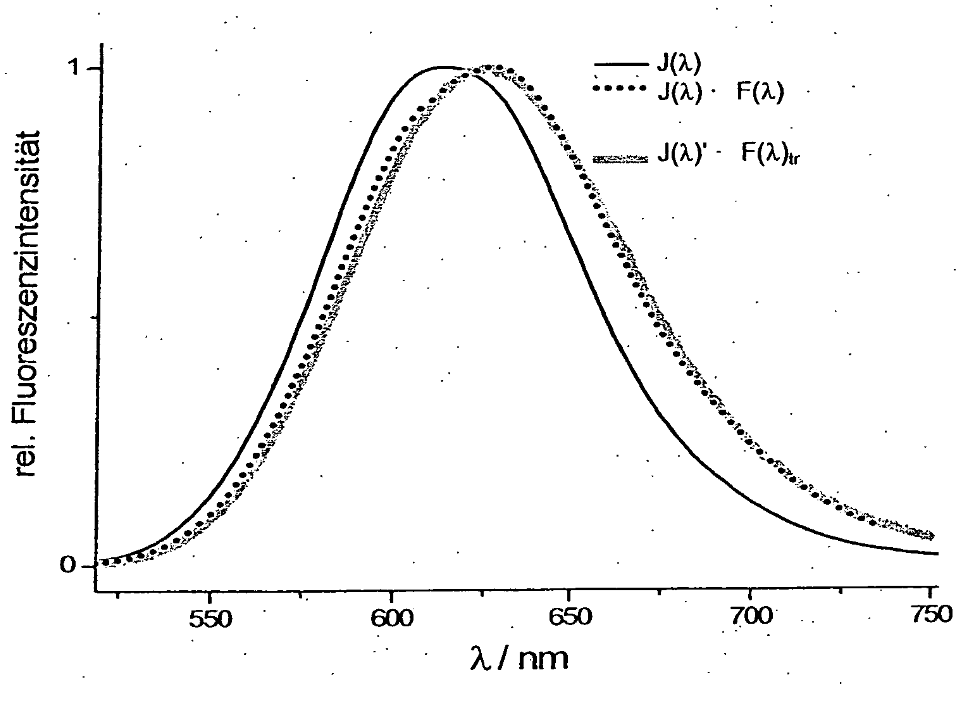
1
0
rel. Fluoreszenzintensität
550
600
650
700
750
λ / nm
J(λ)
J(λ) · F(λ)
J(λ)' · F(λ)tr

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 97119188 A1
- WO 02104072 A2
- US 2003096419 A1


### In der Beschreibung aufgeführte Nicht-Patentliteratur


- **D.F. EATON.** *PURE & APPL CHEM,* 1988, vol. 60 (7), 1107-1114
- **RANCE A. VELAPOLDI et al.** *Journal of Fluorescence,* 2004, vol. 14 (4), 465-472
- **VON J.A. GARDECKI ; M. MARONCELLI.** *Appl. Spectrosc,* 1998, vol. 52, 1179
- **GARDECKI ; MARONCELLI.** *Appl. Spectrosc,* 1998, vol. 52, 1179